# EUROPÄISCHE PATENTSCHRIFT

(11) **EP 4 264 184 B1**
(45) Veröffentlichungstag und Bekanntmachung des Hinweises auf die Patenterteilung: **21.05.2025**
(21) Anmeldenummer: 21794110.3
(22) Anmeldetag: 11.10.2021
(51) Int. Cl.: G01C 21/34

(54) **VERFAHREN UND VORRICHTUNG ZUR ERMITTLUNG EINER FAHRROUTE FÜR EIN AUTOMATISIERT FAHRENDES FAHRZEUG**
METHOD AND APPARATUS FOR THE DETERMINATION OF A DRIVING ROUTE FOR AN AUTOMATICALLY DRIVING VEHICLE
PROCEDE ET DISPOSITIF POUR LA DETERMINATION D'UNE ROUTE DE CIRCULATION POUR UN VEHICULE CIRCULANT DE MANIERE AUTOMATIQUE

(30) Priorität: 17.12.2020 DE 102020133937
(43) Veröffentlichungstag der Anmeldung: 25.10.2023
(73) Patentinhaber: Bayerische Motoren Werke Aktiengesellschaft, 80809 München (DE)
(72) Erfinder: DENICH, Christian, 80992 München (DE); QUATTELBAUM, Benjamin, 81247 München (DE); DENICH, Sabrina, 80992 München (DE)
(86) Internationale Anmeldenummer: PCT/EP2021/078077
(87) Internationale Veröffentlichungsnummer: WO 2022/128199

(56) Entgegenhaltungen:
- US-A1- 2019 113 353
- US-B1- 9 688 288

## Beschreibung

Die Erfindung betrifft ein Fahrzeug, das ausgebildet ist, zumindest teilweise und/oder zumindest abschnittsweise autonom zu fahren. Insbesondere betrifft die Erfindung ein Verfahren und eine entsprechende Vorrichtung zur Ermittlung einer Fahrroute für ein Fahrzeug mit einem automatisierten Fahrmodus.

Ein Fahrzeug kann einen automatisierten Fahrmodus aufweisen, bei dem die Längs- und/oder die Querführung des Fahrzeugs teilweise oder vollständig automatisiert durch das Fahrzeug erbracht wird. Des Weiteren kann das Fahrzeug einen manuellen Fahrmodus aufweisen, bei dem die Längs- und/oder Querführung des Fahrzeugs teilweise oder vollständig durch den Fahrer des Fahrzeugs erbracht wird. Der Automatisierungsgrad des Fahrzeugs kann dabei ggf. in mehreren Stufen zwischen einem vollständig automatisierten Fahrmodus und einem vollständig manuellen Fahrmodus veränderbar sein.

US 9 688 288 B1 beschreibt ein Verfahren zur Routenplanung unter Berücksichtigung von Zonen, in denen autonomes Fahren nicht möglich ist. US 2019/113353 A1 beschreibt ein Verfahren zur Routenplanung für ein autonom fahrendes Fahrzeug.

Um von einem Ausgangspunkt zu einem Zielpunkt zu gelangen, kann mittels einer Navigationsvorrichtung eines autonom fahrenden Fahrzeugs eine Fahrroute geplant werden. Dabei kann der Komfort einer Fahrt von dem Ausgangspunkt zu dem Zielpunkt von der geplanten Fahrroute abhängen. Das vorliegende Dokument befasst sich mit der technischen Aufgabe, die Ermittlung einer möglichst komfortablen Fahrroute für ein Fahrzeug mit einem automatisierten Fahrmodus zu ermöglichen.

Die Aufgabe wird durch jeden der unabhängigen Ansprüche gelöst. Vorteilhafte Ausführungsformen werden u.a. in den abhängigen Ansprüchen beschrieben.

Gemäß einem Aspekt wird eine Vorrichtung zur Ermittlung einer Fahrroute für ein (Kraft-) Fahrzeug beschrieben. Das Fahrzeug weist einen automatisierten Fahrmodus auf, bei dem das Fahrzeug zumindest teilweise oder vollständig automatisiert längs- und/oder quergeführt wird (z.B. gemäß SAE-Level 3 oder mehr). Des Weiteren weist das Fahrzeug einen manuellen Fahrmodus auf, bei dem das Fahrzeug zumindest teilweise oder vollständig manuell durch den Fahrer des Fahrzeugs längs- und/oder quergeführt wird (z.B. gemäß SAE-Level 2 oder weniger).

Die Vorrichtung ist eingerichtet, Freigabeinformation in Bezug auf die Freigabe des automatisierten Fahrmodus auf unterschiedlichen Fahrbahnabschnitten des von dem Fahrzeug befahrenen Fahrbahnnetzes zu ermitteln. Die Vorrichtung kann insbesondere eingerichtet sein, digitale Karteninformation in Bezug auf das von dem Fahrzeug befahrene Fahrbahnnetz zu ermitteln. Die digitale Karteninformation kann die räumliche und/oder geographische Anordnung der unterschiedlichen Fahrbahnabschnitte und/oder Fahrbahn-Knotenpunkte des Fahrbahnnetzes beschreiben. Des Weiteren kann die digitale Karteninformation die Freigabeinformation für unterschiedliche Fahrbahnabschnitte des Fahrbahnnetzes umfassen. Die Freigabeinformation kann ggf. von den aktuellen Witterungsverhältnissen und/oder von der aktuellen Verkehrslage abhängen. Es kann somit ermittelt werden, auf welchen ein oder mehreren Fahrbahnabschnitten des Fahrbahnnetzes (ggf. aktuell) die Nutzung des automatisierten Fahrmodus möglich ist. Des Weiteren kann ermittelt werden, auf welchen ein oder mehreren Fahrbahnabschnitten des Fahrbahnnetzes (ggf. aktuell) die Nutzung des manuellen Fahrmodus erforderlich ist.

Die Vorrichtung ist ferner eingerichtet, Verfügbarkeitsinformation in Bezug auf die Verfügbarkeit des Fahrers des Fahrzeugs zur manuellen Längs- und/oder Querführung des Fahrzeugs bei einer Fahrt von einem Ausgangspunkt (innerhalb des Fahrbahnnetzes) zu einem Zielpunkt (innerhalb des Fahrbahnnetzes) zu ermitteln und/oder zu prädizieren, für die eine Fahrroute ermittelt werden soll. In einer ersten Ausführungsform wird insbesondere prädiziert, in welchen ein oder mehreren vorausliegenden Zeitintervallen auf der Fahrt entlang der zu planenden Fahrroute der Fahrer voraussichtlich für die manuelle Längs- und/oder Querführung des Fahrzeugs zur Verfügung steht oder voraussichtlich nicht für die manuelle Längs- und/oder Querführung des Fahrzeugs zur Verfügung steht.

Die Vorrichtung kann eingerichtet sein, die Verfügbarkeitsinformation auf Basis von ein oder mehreren der folgenden Daten zu ermitteln und/oder zu prädizieren: Sensordaten in Bezug auf den Fahrer, die von ein oder mehreren Fahrersensoren, insbesondere von ein oder mehreren Innenraum-Kameras, des Fahrzeugs erfasst wurden; Daten eines Infotainmentsystems des Fahrzeugs (z.B. in Bezug auf eine Audio und/oder Videosendung, die der Fahrer hören bzw. sehen möchte); Daten aus einem persönlichen Anwendergerät (z.B. Smartphone) des Fahrers; und/oder Daten aus einem digitalen Kalender des Fahrers (z.B. in Bezug auf eine geplante Audio- und/oder Videokonferenz während der Fahrt entlang der zu planenden Fahrroute). So kann somit in präziser Weise die Verfügbarkeit des Fahrers des Fahrzeugs zur manuellen Längs- und/oder Querführung auf der vorausliegenden Fahrt prädiziert werden.

Die Vorrichtung kann insbesondere eingerichtet sein, Verfügbarkeitsinformation zu ermitteln und/oder zu prädizieren, die für eine Sequenz von vorausliegenden Zeitintervallen während der Fahrt von dem Ausgangspunkt zu dem Zielpunkt jeweils den Grad der Verfügbarkeit des Fahrers des Fahrzeugs zur manuellen Längs- und/oder Querführung des Fahrzeugs in dem jeweiligen Zeitintervall anzeigt. In einer zweiten Ausführungsform oder optional ergänzend zeigt die prädizierte Verfügbarkeitsinformation den gewünschten Automatisierungsgrad des Fahrzeugs in dem jeweiligen Zeitintervall der Sequenz von Zeitintervallen an. In der ersten Ausführungsform zeigt die prädizierte Verfügbarkeitsinformation für die Sequenz von vorausliegenden Zeitintervallen jeweils an, ob der Fahrer des Fahrzeugs in dem jeweiligen Zeitintervall dafür verfügbar ist, das Fahrzeug in dem manuellen Fahrmodus zu betreiben oder nicht.

Des Weiteren ist die Vorrichtung eingerichtet, auf Basis der Freigabeinformation und auf Basis der Verfügbarkeitsinformation (und unter Berücksichtigung der digitalen Karteninformation) zumindest eine Fahrroute durch das Fahrbahnnetz von dem Ausgangspunkt bis zu dem Zielpunkt zu ermitteln. Dabei wird zumindest eine Fahrroute ermittelt (unter Verwendung eines Routing-Algorithmus), bei der die Freigabe der Sequenz von Fahrbahnabschnitten der Fahrroute möglichst gut zu der prädizierten Verfügbarkeit des Fahrers zur manuellen Längs- und/oder Querführung des Fahrzeugs an der Sequenz von Zeitintervallen auf der Fahrt entlang der Fahrroute passt. So kann der Komfort für den Fahrer eines Fahrzeugs mit einem automatisierten Fahrmodus erhöht werden.

In der ersten Ausführungsform ist die Vorrichtung eingerichtet (im Rahmen der Ermittlung einer Fahrroute), für eine (mögliche) Fahrroute ein Korrelationsmaß der Korrelation und/oder der Übereinstimmung und/oder der Überlappung zwischen ein oder mehreren Fahrbahnabschnitten, in denen der automatisierte Fahrmodus freigegeben ist, und ein oder mehreren Zeitintervallen, in denen der Fahrer nicht dafür verfügbar ist, das Fahrzeug in dem manuellen Fahrmodus zu betreiben, zu ermitteln. Die Fahrroute wird dann derart ermittelt, dass das Korrelationsmaß vergrößert, insbesondere maximiert, wird. Es kann somit eine Fahrroute ermittelt werden, die eine möglichst große (zeitliche und/oder örtliche) Korrelation zwischen Fahrbahnabschnitten, die für den automatisierten Fahrmodus freigegeben sind, und Zeitintervallen mit niedriger Verfügbarkeit zum manuellen Fahren des Fahrers aufweist. So kann der Komfort für den Fahrer des Fahrzeugs weiter erhöht werden.

In der zweiten Ausführungsform zeigt die Freigabeinformation für eine Vielzahl von Fahrbahnabschnitten des Fahrbahnnetzes jeweils den möglichen Automatisierungsgrad des Fahrzeugs in dem jeweiligen Fahrbahnabschnitt an. Die Vorrichtung ist eingerichtet (im Rahmen der Ermittlung einer Fahrroute), für eine (mögliche) Fahrroute mit einer Sequenz von Fahrbahnabschnitten ein Korrelationsmaß der Korrelation und/oder der Überlappung und/oder der Übereinstimmung zwischen den möglichen Automatisierungsgraden auf der Sequenz von Fahrbahnabschnitten der Fahrroute und den gewünschten Automatisierungsgraden an der Sequenz von Zeitintervallen bei der Fahrt von dem Ausgangspunkt zu dem Zielpunkt zu ermitteln. Die Fahrroute wird dann derart ermittelt, dass das Korrelationsmaß vergrößert, insbesondere maximiert, wird.

Es kann somit zumindest eine Fahrroute ermittelt werden, bei der die möglichen Automatisierungsgrade des Fahrzeugs auf den Fahrbahnabschnitten der geplanten Fahrroute möglichst gut zu der prädizierten Nicht-Verfügbarkeit des Fahrers zur manuellen Längs- und/oder Querführung passt. So kann der Komfort des Fahrers des Fahrzeugs in besonders ausgeprägter Weise erhöht werden.

Ergänzend kann die Vorrichtung eingerichtet sein, auf Basis der Verfügbarkeitsinformation ein Zeitintervall bei der vorausliegenden Fahrt von dem Ausgangspunkt zu dem Zielpunkt zu prädizieren, in dem der Fahrer nicht zur manuellen Längs- und/oder Querführung des Fahrzeugs verfügbar sein wird. Des Weiteren kann die Vorrichtung eingerichtet sein, die Fahrroute derart auf Basis der Freigabeinformation zu ermitteln, dass sich das Fahrzeug (voraussichtlich) in dem prädizierten Zeitintervall in einem Fahrbahnabschnitt befindet bzw. befinden wird, der für den automatisierten Fahrmodus freigegeben ist. Es kann somit eine Fahrroute ermittelt werden, bei der die ein oder mehrere prädizierten Zeitintervalle der Nicht-Verfügbarkeit des Fahrers mit ein oder mehreren Fahrbahnabschnitten übereinstimmen und/oder korrelieren, in denen die Nutzung des automatisierten Fahrmodus freigegeben ist. Mit anderen Worten, die Fahrroute kann derart geplant werden, dass ggf. ein Umweg genommen wird, um ein höheren Automatisierungsgrad des Fahrzeugs zu den ein oder mehreren Zeitpunkten der prädizierten Nicht-Verfügbarkeit des Fahrers zu ermöglichen. So kann der Komfort des Fahrers des Fahrzeugs in zuverlässiger Weise erhöht werden.

Die Vorrichtung kann eingerichtet sein, auf Basis der digitalen Karteninformation in Bezug auf das Fahrbahnnetz (und ggf. unter Berücksichtigung von aktueller Verkehrsinformation in Bezug auf die aktuelle Verkehrslage in dem Fahrbahnnetz) eine voraussichtliche Zeitdauer für die zu ermittelnde Fahrroute zu schätzen. Die Verfügbarkeitsinformation kann dann für die (gesamte) voraussichtliche Zeitdauer ermittelt und/oder prädiziert werden. So kann eine besonders komfortable Fahrroute ermittelt werden.

Die Vorrichtung kann eingerichtet sein, die Fahrroute anhand eines Routing-Algorithmus zu ermitteln, bei dem für unterschiedliche mögliche Fahrbahnabschnitte des Fahrbahnnetzes jeweils ein Abschnitts-Gewicht berücksichtigt wird, das die Wertigkeit des jeweiligen möglichen Fahrbahnabschnitts für die zu ermittelnde Fahrroute anzeigt. Die Abschnitts-Gewichte der unterschiedlichen möglichen Fahrbahnabschnitte können auf Basis der Verfügbarkeitsinformation ermittelt werden. Dabei kann ein Abschnitts-Gewicht für einen Fahrbahnabschnitt erhöht werden (um eine relativ hohe Wertigkeit für die zu planende Fahrroute anzuzeigen), wenn der Fahrbahnabschnitt eine Freigabe für den automatisierten Fahrmodus aufweist und wenn der Fahrbahnabschnitt für ein Zeitintervall entlang der Fahrroute vorgesehen ist, an dem der Fahrer des Fahrzeugs nicht für die manuelle Längs- und/oder Querführung des Fahrzeugs zur Verfügung steht. Andererseits kann ein Abschnitts-Gewicht für einen Fahrbahnabschnitt reduziert werden (um eine relativ niedrige Wertigkeit für die zu planende Fahrroute anzuzeigen), wenn der Fahrbahnabschnitt keine Freigabe für den automatisierten Fahrmodus aufweist und wenn der Fahrbahnabschnitt für ein Zeitintervall entlang der Fahrroute vorgesehen ist, an dem der Fahrer des Fahrzeugs nicht für die manuelle Längs- und/oder Querführung des Fahrzeugs zur Verfügung steht. Durch die Anpassung der Abschnitts-Gewichte in Abhängigkeit von der Verfügbarkeitsinformation kann in besonders zuverlässiger Weise eine Fahrroute ermittelt werden, die Fahrbahnabschnitte für automatisiertes Fahren aufweist, die besonders gut an die prädizierte Nicht-Verfügbarkeit für manuelles Fahren des Fahrers angepasst sind.

Die Vorrichtung kann eingerichtet sein, bei bzw. während der Fahrt von dem Ausgangspunkt zu dem Zielpunkt, insbesondere wiederholt und/oder periodisch, aktualisierte Verfügbarkeitsinformation in Bezug auf die Verfügbarkeit des Fahrers des Fahrzeugs zur manuellen Längs- und/oder Querführung des Fahrzeugs bei der Fahrt von dem jeweils aktuellen Standort des Fahrzeugs bis zu dem Zielpunkt zu ermitteln und/oder zu prädizieren. Es kann somit während der Fahrt (mit der ursprünglich geplanten Fahrroute) überprüft werden, ob sich die Verfügbarkeit des Fahrers zur manuellen Längs- und/oder Querführung des Fahrzeugs (gegenüber der letzten Vorhersage bzw. Prädiktion) geändert hat. Beispielsweise kann überprüft werden, ob die Verfügbarkeit des Fahrers tendenziell sinkt. Alternativ oder ergänzend kann überprüft werden, ob sich die ein oder mehreren Zeitintervalle der Verfügbarkeit bzw. der Nicht-Verfügbarkeit des Fahrers verändert haben.

Des Weiteren kann die Vorrichtung eingerichtet sein (während der Fahrt), die Fahrroute von dem aktuellen Standort des Fahrzeugs bis zu dem Zielpunkt auf Basis der aktualisierten Verfügbarkeitsinformation anzupassen. Dabei kann jeweils eine aktualisierte Fahrroute ermittelt werden, durch die ein Korrelationsmaß erhöht, insbesondere maximiert, wird. Alternativ oder ergänzend kann eine aktualisierte Fahrroute ermittelt werden, durch die die ein oder mehreren Fahrbahnabschnitte mit relativ hohem Automatisierungsgrad des Fahrzeugs (z.B. mit freigegebenem automatisierten Fahrmodus) an die ein oder mehreren aktualisierten Zeitintervalle der Nicht-Verfügbarkeit des Fahrers angepasst werden. Beispielsweise kann bei einer steigenden Nicht-Verfügbarkeit des Fahrers eine aktualisierte Fahrroute ermittelt werden, die einen erhöhten Anteil von Fahrbahnabschnitten aufweist, in denen der automatisierte Fahrmodus freigegeben ist (und die typischerweise länger ist, als die zuvor geltende Fahrroute). Durch eine (ggf. wiederholte) Anpassung der Fahrroute kann der Komfort des Fahrers weiter erhöht werden.

Die Vorrichtung kann eingerichtet sein, Routeninformation in Bezug auf die ermittelten Fahrroute an den Fahrer des Fahrzeugs auszugeben (z.B. über eine Benutzerschnittstelle des Fahrzeugs). Die Routeninformation kann dabei die ein oder mehreren Zeitintervalle und/oder die ein oder mehreren Fahrbahnabschnitte bei der Fahrt entlang der ermittelten Fahrroute anzeigen (z.B. bildlich), in denen das Fahrzeug in dem automatisierten Fahrmodus betrieben werden kann oder in denen das Fahrzeug in dem manuellen Fahrmodus betrieben werden muss. Durch die Ausgabe von Routeninformation (in Bezug auf ein oder mehrere unterschiedliche geplante Fahrrouten) kann es dem Fahrer des Fahrzeugs in komfortabler Weise ermöglicht werden, eine Fahrroute auszusuchen, die besonders gut zu seiner geplanten Verfügbarkeit für manuellen Fahren passt. Gemäß einem weiteren Aspekt wird ein (Straßen-)Kraftfahrzeug (insbesondere ein Personenkraftwagen oder ein Lastkraftwagen oder ein Bus) beschrieben, das die in diesem Dokument beschriebene Vorrichtung umfasst.

Gemäß einem weiteren Aspekt betriffte die Erfindung ein Verfahren wie in einem der Ansprüche 10 oder 11 definiert.

Gemäß einem weiteren Aspekt wird ein Software (SW) Programm beschrieber, jedoch nicht beansprucht.

Das SW Programm kann eingerichtet werden, um auf einem Prozessor (z.B. auf einem Steuergerät eines Fahrzeugs oder auf einem Server) ausgeführt zu werden, und um dadurch das in diesem Dokument beschriebene Verfahren auszuführen.

Gemäß einem weiteren Aspekt wird ein Speichermedium beschrieber, jedoch nicht beansprucht. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Im Weiteren wird die Erfindung anhand von Ausführungsbeispielen näher beschrieben. Dabei zeigen
Figur 1 beispielhafte Komponenten eines Fahrzeugs;
Figur 2 beispielhafte Module zur Ermittlung einer Nutzer-abhängigen Fahrroute;
Figur 3 beispielhafte Verfügbarkeitsinformation eines Nutzers auf einer Fahrt von einem Ausgangspunkt zu einem Zielpunkt; und
Figur 4 ein Ablaufdiagramm eines beispielhaften Verfahrens zur Ermittlung einer Fahrroute für ein Fahrzeug mit einem automatisierten Fahrmodus.

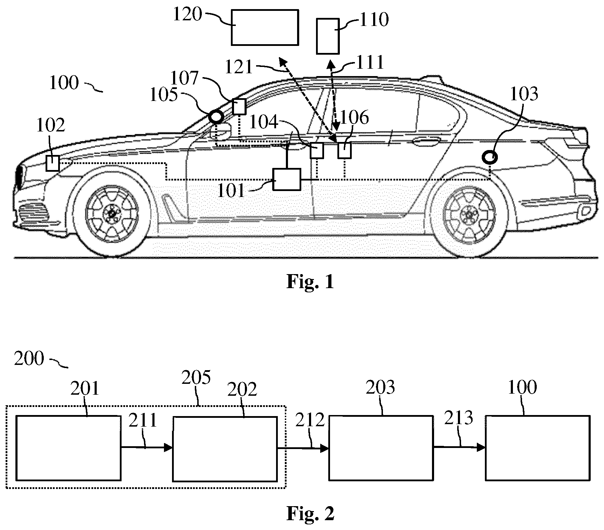

Wie eingangs dargelegt, befasst sich das vorliegende Dokument mit der Ermittlung einer möglichst komfortablen Fahrroute für ein autonom fahrendes Fahrzeug. In diesem Zusammenhang zeigt Fig. 1 ein beispielhaftes Fahrzeug 100 mit einem automatisierten Fahrmodus, der z.B. ein automatisiertes Führen des Fahrzeugs 100 gemäß SAE-Level 3 oder höher ermöglicht.

Das Fahrzeug 100 kann ein oder mehrere Umfeldsensoren 102 umfassen, die eingerichtet sind, Umfelddaten (d.h. Sensordaten) in Bezug auf das Umfeld des Fahrzeugs 100 zu erfassen. Beispielhafte Umfeldsensoren 102 sind eine Kamera, ein Radarsensor, ein Lidarsensor, ein Ultraschallsensor, etc. Eine Steuereinheit (bzw. Vorrichtung) 101 des Fahrzeugs 100 kann eingerichtet sein, auf Basis der Umfelddaten ein Umfeldmodell in Bezug auf das Umfeld des Fahrzeugs 100 zu erstellen. Das Umfeldmodell kann z.B. den Fahrbahnverlauf, ein oder mehrere andere Verkehrsteilnehmer, ein oder mehrere Hindernisse, etc. im Umfeld des Fahrzeugs 100 beschreiben.

Die Steuereinheit 101 kann eingerichtet sein, ein oder mehrere Längs- und/oder Querführungsaktoren 103 (z.B. eine Lenkvorrichtung, einen Antriebsmotor, eine Bremsvorrichtung, etc.) in Abhängigkeit von den Umfelddaten, insbesondere in Abhängigkeit von dem Umfeldmodell, zu betreiben, insbesondere um das Fahrzeug 100 zumindest teilweise automatisiert längs- und/oder querzuführen (d.h. um einen automatisierten Fahrmodus des Fahrzeugs 100 bereitzustellen).

Das Fahrzeug 100 kann ferner eine Speichereinheit 104 umfassen, auf der z.B. digitale Karteninformation in Bezug auf das von dem Fahrzeug 100 befahrene Fahrbahnnetz gespeichert ist. Des Weiteren kann das Fahrzeug 100 einen Positionssensor, z.B. eine GPS-Empfänger, (nicht dargestellt) umfassen, der eingerichtet ist, Positionsdaten in Bezug auf die Position des Fahrzeugs 100 zu ermitteln. Die Steuereinheit 101 kann eingerichtet sein, auf Basis der digitalen Karteninformation (ggf. unter Berücksichtigung der Positionsdaten) eine Fahrroute für das Fahrzeug 100 von einem Ausgangspunkt bis zu einem Zielpunkt innerhalb des Fahrbahnnetzes zu planen.

Das Fahrzeug 100 kann außerdem eine Kommunikationseinheit 106 umfassen, die ausgebildet ist, eine (ggf. drahtlose) Kommunikationsverbindung 121 mit einer Fahrzeug-externen Einheit 120 (z.B. mit einem Backend-Server) aufzubauen. Beispielsweise kann aktualisierte digitale Karteninformation von der Fahrzeug-externen Einheit 120, z.B. Information in Bezug auf eine aktuelle Verkehrslage, bereitgestellt werden.

Alternativ oder ergänzend kann über die Kommunikationseinheit 106 des Fahrzeugs 100 ggf. eine (drahtlose) Kommunikationsverbindung 111 mit einem Anwendergerät 120 (z.B. einem Smartphone) eines Nutzers, insbesondere des Fahrers, des Fahrzeugs 100 aufgebaut werden, z.B. um Information in Bezug auf den Nutzer, z.B. in Bezug auf einen digitalen Kalender des Nutzers, bereitzustellen.

Des Weiteren kann das Fahrzeug 100 eine Benutzerschnittstelle 105 umfassen (z.B. mit ein oder mehreren Bedienelementen und/oder mit ein oder mehreren Ausgabeelementen), die eine Interkation zwischen dem Fahrzeug 100 und dem Nutzer, insbesondere dem Fahrer, des Fahrzeugs 100 ermöglicht.

Außerdem kann das Fahrzeug 100 ein oder mehrere Fahrersensoren 107, insbesondere eine auf den Fahrer des Fahrzeugs 100 gerichtete Kamera, aufweisen, die eingerichtet sein, Fahrerdaten, d.h. Sensordaten, in Bezug auf den (Zustand des) Fahrers zu erfassen.

Wie eingangs dargelegt, kann das Fahrzeug 100 ausgebildet sein, in einem automatisierten Fahrmodus oder in einem manuellen Fahrmodus betrieben zu werden. Dabei kann ggf. der Automatisierungsgrad des Fahrzeugs 100 in mehreren Stufen zwischen einem vollständig automatisierten Fahrmodus und einem vollständig manuellen Fahrmodus einstellbar sein.

Der Automatisierungsgrad, in dem das Fahrzeug 100 betrieben wird, kann von dem Fahrbahnabschnitt abhängen, auf dem sich das Fahrzeug 100 befindet. Ein Fahrbahnabschnitt, z.B. auf einer Autobahn, kann ggf. für autonomes oder zumindest teil-autonomes Fahren freigegeben sein. Mit anderen Worten, auf einem bestimmten Fahrbahnabschnitt kann die Nutzung des (ggf. vollständig) automatisierten Fahrmodus des Fahrzeugs möglich sein. Andererseits kann ggf. auf einem anderen Fahrbahnabschnitt (z.B. in der Stadt oder an einer Baustelle) die Nutzung des automatisierten Fahrmodus nicht möglich und/oder die Nutzung des manuellen Fahrmodus erforderlich sein.

Die Freigabeinformation darüber, ob ein Fahrbahnabschnitt grundsätzlich für die Nutzung des automatisierten Fahrmodus freigegeben ist, und/oder die Freigabeinformation über den zulässigen Automatisierungsgrad eines Fahrzeugs 100 in einem Fahrbahnabschnitt, kann z.B. als digitale Karteninformation in Bezug auf das von dem Fahrzeug befahrene Fahrbahnnetz gespeichert und/oder (von der Fahrzeug-externen Einheit 120) bereitgestellt werden. Die Freigabeinformation für einen Fahrbahnabschnitt kann dabei ggf. auch von den aktuellen Witterungsverhältnissen und/oder von der aktuellen Verkehrssituation und/oder Verkehrsdichte abhängen.

Um von einem Ausgangspunkt zu einem Zielpunkt zu gelangen, kann durch die Steuereinheit 101 des Fahrzeugs 100 eine Fahrroute geplant werden. Dabei kann bei der Routenplanung die Freigabeinformation der Fahrbahnabschnitte auf einer möglichen Fahrroute berücksichtigt werden. Beispielsweise kann eine Fahrroute ermittelt werden, die einen möglichst großen Anteil an Fahrbahnabschnitten aufweist, auf denen das Fahrzeug 100 in dem automatisierten Fahrmodus (z.B. gemäß SAE-Level 3 oder höher) betrieben werden kann. So kann der Komfort für den Nutzer des Fahrzeugs 100 erhöht werden, da der Anteil der Fahrstrecke, bei der das Fahrzeug 100 in dem manuellen Fahrmodus (z.B. gemäß SAE-Level 2 oder weniger) betrieben werden muss, reduziert werden kann.

Die Steuereinheit 101 des Fahrzeugs 100 kann eingerichtet sein, für eine zu planende Fahrroute ausgehend von einem Ausgangspunkt bis zu einem Zielpunkt Verfügbarkeitsinformation in Bezug auf die Verfügbarkeit des Fahrers des Fahrzeugs 100 während der Fahrt von dem Ausgangspunkt bis zu dem Zielpunkt zu prädizieren. Die Verfügbarkeitsinformation kann z.B. ermittelt werden, auf Basis
- der Fahrerdaten der ein oder mehreren Fahrersensoren 107 des Fahrzeugs 100;
- Daten (z.B. Kalendereinträge eines digitalen Kalenders) aus dem Anwendergerät 110 des Fahrers; und/oder
- eine Eingabe des Fahrers über die Benutzerschnittstelle 105 des Fahrzeugs 100 (z.B. um einen Zeitabschnitt während der Fahrt zu reservieren, an dem kein manuelles Fahren erforderlich sein sollte).

Die Verfügbarkeitsinformation kann die Verfügbarkeit des Fahrers zur manuellen Fahrzeugführung als Funktion der Zeit während der Fahrt anzeigen. Dabei kann sich der Grad der Verfügbarkeit des Fahrers mit der Zeit verändern.

Beispielsweise kann der Fahrer in einem bestimmten Zeitabschnitt bzw. Zeitintervall während der Fahrt eine Telefonkonferenz geplant haben, was dazu führt, dass der Fahrer in diesem Zeitintervall eine reduzierte Verfügbarkeit zur Fahrzeugführung aufweist. Ferner kann der Fahrer in einem weiteren Zeitintervall eine Ruhephase geplant haben, so dass der Fahrer in diesem Zeitintervall überhaupt nicht für die Fahrzeugführung zur Verfügung steht. Andererseits kann es ein oder mehrere andere Zeitintervalle geben, in denen der Fahrer nicht fest verplant ist, und somit voraussichtlich für die Fahrzeugführung zur Verfügung steht.

Die Steuereinheit 101 kann eingerichtet sein, die Verfügbarkeitsinformation des Fahrers des Fahrzeugs 100 bei der Planung der Fahrroute zu berücksichtigen. Insbesondere kann eine Fahrroute ermittelt werden, die eine möglichst hohe Übereinstimmung zwischen
- (Zeit-) Intervallen aufweist, in denen der Fahrer voraussichtlich nicht für die Fahrzeugführung verfügbar ist; und
- (Fahrbahn-) Abschnitten, in denen das Fahrzeug 100 in dem automatisierten Fahrmodus betrieben werden kann.

So kann eine besonders komfortable Fahrroute für einen Nutzer eines Fahrzeug 100 ermittelt werden.

Fig. 2 veranschaulicht eine beispielhafte Vorrichtung 200 zur Ermittlung einer Fahrroute für ein Fahrzeug 100. Die Vorrichtung 200 umfasst ein Verhaltens-Schätzmodul 201, das ausgebildet ist, das Verhalten des Fahrers des Fahrzeugs 100 auf der Fahrt der zu planenden Fahrroute zu schätzen. Die prädizierte Verhaltens- und/oder Verfügbarkeitsinformation 211 kann an ein Verarbeitungs-Modul 202 übergeben werden, das ausgebildet ist, auf Basis der Verhaltens- und/oder Verfügbarkeitsinformation 211 Verhaltens- und/oder Verfügbarkeitsdaten 212 zu ermitteln, die ein Datenformat aufweisen, das in einem Routing-Algorithmus verwendet werden kann. Ggf. kann ein kombiniertes Modul 205 bereitgestellt werden, dass direkt die Verhaltens- und/oder Verfügbarkeitsdaten 212 in dem Datenformat für den Routing-Algorithmus bereitstellt.

Die Vorrichtung 200 umfasst ferner ein Routing-Modul 203, das eingerichtet ist, auf Basis der Verhaltens- und/oder Verfügbarkeitsdaten 212 und auf Basis der digitalen Kartendaten (unter Berücksichtigung der Freigabeinformation für die einzelnen Fahrbahnabschnitte) Fahrroutendaten 213 für ein oder mehrere mögliche Fahrrouten zu ermitteln.

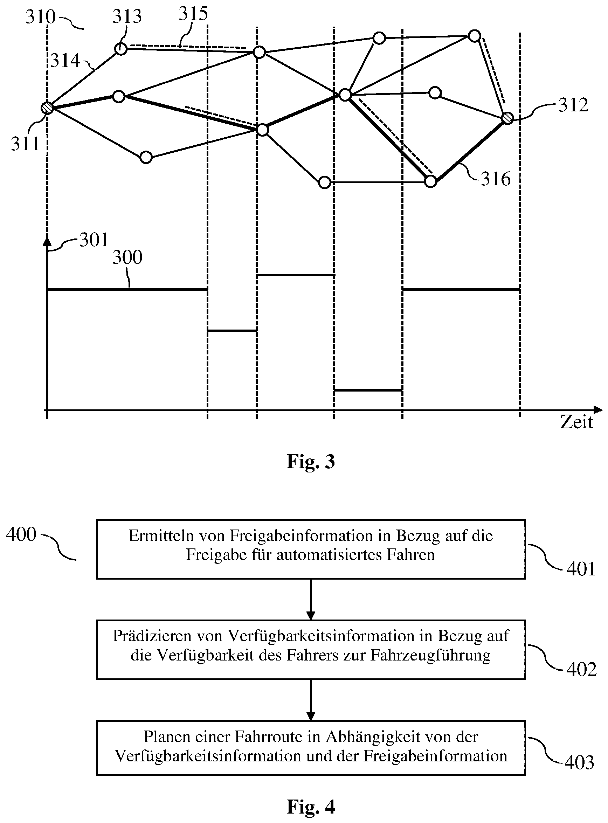

Die Ermittlung einer Fahrroute 316 ausgehend von einem Ausgangspunkt 311 bis zu einem Zielpunkt 312 ist beispielhaft in Fig. 3 dargestellt. Insbesondere zeigt Fig. 3 einen Ausschnitt aus einem Fahrbahnnetz 310, wobei das Fahrbahnnetz 310 eine Vielzahl von Knotenpunkten 313 und eine Vielzahl von Kanten bzw. Verbindungspfaden 314 zwischen unterschiedlichen Knotenpunkten 313 umfasst. Das Fahrbahnnetz 310, insbesondere die geographische Anordnung des Fahrbahnnetzes 310, kann durch die digitale Karteninformation angezeigt und/oder beschrieben werden. Die digitale Karteninformation kann ferner Freigabeinformation 315 für ein oder mehrere Fahrbahnabschnitte, d.h. für Kanten 314 bzw. Abschnitte von Kanten 314, des Fahrbahnnetzes 310 anzeigen. In Fig. 3 werden beispielhaft die Fahrbahnabschnitte 314 durch gestrichelte Linien veranschaulicht, die für die Nutzung des automatisierten Fahrmodus freigegeben sind.

Des Weiteren ist in Fig. 3 beispielhafte Verfügbarkeitsinformation 211 dargestellt. Insbesondere zeigt Fig. 3 einen beispielhaften zeitlichen Verlauf 300 der Verfügbarkeit bzw. des Grads 301 der Verfügbarkeit des Fahrers des Fahrzeugs 100 für die manuelle Fahrzeugführung. Die Verfügbarkeit 301 des Fahrers kann bei der Routenplanung berücksichtigt werden. Insbesondere kann eine Fahrroute 316 ermittelt werden, bei der die Abschnitte mit geringer Fahrer-Verfügbarkeit möglichst gut mit Fahrbahnabschnitten 314 überlappen, die für die Nutzung des automatisierten Fahrmodus freigegeben sind.

In diesem Dokument wird somit eine multikriterielle Routenoptimierung unter Einbezug von Road-Clearance Informationen, d.h. von Freigabeinformation 315, zur Bestimmung von Fahrrouten 316 beschrieben. Eine ermittelte Fahrroute 316 kann dabei hinsichtlich ein oder mehrerer Eigenschaften (wie z.B. estimated time of arrival (ETA), Road Clearance/Fahrfreigabe für assistiertes, teilautonomes oder vollautonomes Fahren, etc.) zeitlich an ein beobachtetes Fahrerverhalten und/oder an einen geschätzten zukünftigen Fahrerverhaltenswunsch (d.h. an Verfügbarkeitsinformation 211 für den Fahrer) angepasst sein. Insbesondere kann eine Fahrroute 316 ermittelt werden, um
- eine am Stück hängende HAF-Zeit zu erhöhen, insbesondere zu maximieren; und/oder
- eine zeitliche Optimierung der Abschnitte der HAF-Zeit passend zu ein oder mehreren Kalenderterminen, dem laufenden Entertainmentprogramm, etc. des Fahrers zu bewirken. Dabei kann ggf. eine verlängerte Reisezeit und/oder Distanz akzeptiert werden.

Ein Verhaltensschätzer 201 kann dazu verwendet werden, das aktuelle und zukünftige Verhalten des Fahrers basierend auf verschiedenen Datenquellen zu schätzen. Die ermittelte Verhaltens- und/oder Verfügbarkeitsinformation 211 kann an einen Präprozessor 202 übergeben werden. Der Präprozessor 202 übersetzt diese Informationen 211 in ein für die Routing-Engine 203 verwendbares Datenformat. Dabei kann eine Unterteilung des geschätzten Verhaltens des Fahrers in unterschiedliche Zeitintervalle (z.B. time buckets) erfolgen. Ferner kann eine Kategorisierung der Tätigkeiten des Fahrers erfolgen. Die unterschiedlichen Kategorien der Tätigkeiten können anhand ihrer Komplexität für den Fahrer bewertet werden. Tätigkeiten mit einer relativ hohen Komplexität (und somit Zeitintervalle mit einer relativ niedrigen Verfügbarkeit 301) können eine höhere Priorität zum Gebrauch von HAF-Zeit aufweisen, um den Fahrer optimal zu entlasten. Die Komplexitätsbewertung kann auf allgemeinen Kategorien sowie personenbezogenen Informationen des Fahrers bei vergleichbaren Aktivitäten in der Vergangenheit (z.B. Anzahl Eingriffe FAS, erkannte Ablenkung vom Straßenverkehr durch Innenraumkamera 107, erkannte Ermüdungserscheinungen etc.) beruhen. Ein sicherheitsrelevantes, prädiziertes Verhalten des Fahrers, wie bspw. Müdigkeit, kann die höchste Priorisierung für die Nutzung von HAF (d.h. für die Nutzung des automatisierten Fahrmodus) erhalten. Die ermittelten Daten 212 können an die Routing-Engine 203 übergeben werden.

Die Routing-Engine 203 berechnet z.B. mittels eines dynamischen Graphen (wie beispielhaft in Fig. 3 dargestellt) ein oder mehrere Routenvorschläge. Eine Route 316 kann dabei derart ermittelt werden, dass die auf der Route 316 möglichen Stufen des assistierten und/oder autonomen Fahrens möglichst weitgehend die geplanten und/oder prädizierten Tätigkeiten und/oder das geschätzte Verhalten des Fahrers ermöglichen. Dies kann insbesondere dadurch ermöglicht werden, dass Link- bzw. Abschnitts-Gewichte für Fahrbahnabschnitte mit positiver Road Clearance (d.h. in denen die Nutzung des automatisierten Fahrmodus möglich ist) in den Zeitintervallen (entsprechend der Priorisierung aus dem Verhaltensschätzer 201) mit höherer Priorisierung für die Nutzung von teil-/vollautonomes Fahren (basierend auf dem geschätzten Verhalten, d.h. basierend auf der Verhaltensinformation, des Fahrers) erhöht werden.

Nach der Routenberechnung kann überprüft werden, ob eine berechnete Route 316 ein oder mehrere Nebenbedingungen (z.B. eine nicht zu überschreitende Estimated Time of Arrival (ETA) an dem Zielpunkt 312, einen maximal zulässigen zusätzlichen Zeitaufwand im Vergleich zu der schnellsten Route, etc. ) einhält.

Ein oder mehrere optimierte Routen 316 können über die Benutzerschnittstelle 105 an den Fahrer ausgegeben werden. Dabei kann auch Information darüber ausgegeben werden, in welchen ein oder mehreren Abschnitten 314 der jeweiligen Route 316 ein Betrieb im automatisierten Fahrmodus erfolgt. Die ein oder mehreren Routen 316 können im Fahrzeug 100 und/oder durch eine Fahrzeug-externe Einheit 120 ermittelt werden.

Beispielsweise kann durch Abgleich des persönlichen Kalenders des Nutzers des Fahrzeugs 100 ermittelt werden, ob in der Zeit der geplanten Route eine Tätigkeit geplant ist, die leichter bei einem TAF/HAF Betrieb des Fahrzeugs 100 durchzuführen ist (z.B. ein Telefonat). In einem weiteren Beispiel kann die HAF-Zeit des Fahrzeugs 100 an das aktuelle Entertainmentprogramm des Nutzers angepasst werden (z.B. an den Zeitraum eines Audio- und/oder Videoprogramms).

Durch das Vorschlagen von mehreren möglichen Fahrrouten 316 kann ggf. ermittelt und/oder erlernt werden, ob der Nutzer eine längere Fahrtzeit akzeptiert, wenn eine Route 316 mehr zusammenhängende HAF-Zeit aufweist und/oder wenn eine Route 316 HAF-Zeiten aufweist, die gut zu den geplanten Tätigkeiten des Nutzers passen. So kann die Routenplanung an Präferenzen des Nutzers angepasst werden.

Fig. 4 zeigt ein Ablaufdiagramm eines beispielhaften (ggf. Computerimplementierten) Verfahrens 400 zur Ermittlung einer Fahrroute 316 für ein (Kraft-) Fahrzeug 100. Das Verfahren 400 kann durch eine Steuereinheit 101 des Fahrzeugs 100 und/oder durch eine Fahrzeug-externe Einheit 120 ausgeführt werden. Das Fahrzeug 100 weist einen automatisierten Fahrmodus aufweist, bei dem das Fahrzeug 100 zumindest teilweise automatisiert längs- und/oder quergeführt wird (z.B. gemäß SAE-Level 3 oder mehr). Des Weiteren weist das Fahrzeug 100 einen manuellen Fahrmodus auf, bei dem das Fahrzeug 100 zumindest teilweise manuell durch den Fahrer des Fahrzeugs 100 längs- und/oder quergeführt wird (z.B. gemäß SAE-Level 2, 1 oder 0).

Das Verfahren 400 umfasst das Ermitteln 401 von Freigabeinformation 315 in Bezug auf die Freigabe des automatisierten Fahrmodus auf unterschiedlichen Fahrbahnabschnitten 314 des von dem Fahrzeug 100 befahrenen Fahrbahnnetzes 310. Die Freigabeinformation 315 kann als Teil von digitaler Karteninformation in Bezug auf das Fahrbahnnetz 310 bereitgestellt werden. Die Freigabeinformation 315 kann für die einzelnen Fahrbahnabschnitte 314 jeweils den möglichen Automatisierungsgrad von Fahrzeugen 100 bei der Fahrt auf dem jeweiligen Fahrbahnabschnitt 314 anzeigen.

Des Weiteren umfasst das Verfahren 400 das Ermitteln und/oder Prädizieren 402 von Verfügbarkeitsinformation 211, 212 in Bezug auf die Verfügbarkeit des Fahrers des Fahrzeugs 100 zur manuellen Längs- und/oder Querführung des Fahrzeugs 100 bei einer Fahrt von einem Ausgangspunkt 311 zu einem Zielpunkt 312, wobei für die Fahrt eine Fahrroute 316 zu planen ist. Die Verfügbarkeitsinformation 211, 212 kann auf Basis der Sensordaten von ein oder mehreren Fahrersensoren 107 des Fahrzeugs 100 und/oder auf Basis eines Terminplans des Fahrers aus einem digitalen Kalender des Fahrers ermittelt werden. Die Verfügbarkeitsinformation 211, 212 kann für eine Sequenz von vorausliegenden Zeitintervallen jeweils den Grad 301 der Verfügbarkeit des Fahrers zur manuellen Längs- und/oder Querführung des Fahrzeugs 100 anzeigen.

Das Verfahren 400 umfasst ferner das Ermitteln 403 einer Fahrroute 316 durch das Fahrbahnnetz 310 von dem Ausgangspunkt 311 bis zu dem Zielpunkt 312 auf Basis der Freigabeinformation 315 und auf Basis der Verfügbarkeitsinformation 211, 212. Es kann insbesondere eine Fahrroute 316 ermittelt werden, bei der es eine möglichst große Überlappung von Zeitintervallen, in denen der Fahrer nicht für die manuelle Längs- und/oder Querführung des Fahrzeugs 100 zur Verfügung steht, mit Fahrbahnabschnitten 314, in denen die Nutzung des automatisierten Fahrmodus möglich ist, besteht.

Durch die in diesem Dokument beschriebenen Maßnahmen kann der Komfort eines Nutzers eines Fahrzeugs 100 mit einem automatisierten Fahrmodus erhöht werden.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Vorrichtung (101, 120) zur Ermittlung einer Fahrroute (316) für ein Fahrzeug (100), das einen automatisierten Fahrmodus aufweist, bei dem das Fahrzeug (100) zumindest teilweise automatisiert längs- und/oder quergeführt wird, und das einen manuellen Fahrmodus aufweist, bei dem das Fahrzeug (100) zumindest teilweise manuell durch einen Fahrer des Fahrzeugs (100) längs- und/oder quergeführt wird, wobei die Vorrichtung (101, 120) eingerichtet ist,
- Freigabeinformation (315) in Bezug auf die Freigabe des automatisierten Fahrmodus auf unterschiedlichen Fahrbahnabschnitten (314) eines von dem Fahrzeug (100) befahrenen Fahrbahnnetzes (310) zu ermitteln;
- Verfügbarkeitsinformation (211, 212) in Bezug auf eine Verfügbarkeit des Fahrers des Fahrzeugs (100) zur manuellen Längs- und/oder Querführung des Fahrzeugs (100) bei einer Fahrt von einem Ausgangspunkt (311) zu einem Zielpunkt (312) zu ermitteln und/oder zu prädizieren; wobei die Verfügbarkeitsinformation (211, 212) für eine Sequenz von Zeitintervallen während der Fahrt von dem Ausgangspunkt (311) zu dem Zielpunkt (312) jeweils anzeigt, ob der Fahrer des Fahrzeugs (100) in dem jeweiligen Zeitintervall dafür verfügbar ist, das Fahrzeug (100) in dem manuellen Fahrmodus zu betreiben oder nicht;
- für eine Fahrroute (316) durch das Fahrbahnnetz (310) von dem Ausgangspunkt (311) bis zu dem Zielpunkt (312) auf Basis der Freigabeinformation (315) und auf Basis der Verfügbarkeitsinformation (211, 212) ein Korrelationsmaß einer Korrelation zwischen Fahrbahnabschnitten (314), in denen der automatisierte Fahrmodus freigegeben ist, und Zeitintervallen, in denen der Fahrer nicht dafür verfügbar ist, das Fahrzeug (100) in dem manuellen Fahrmodus zu betreiben, zu ermitteln; und
- die Fahrroute (316) derart zu ermitteln, dass das Korrelationsmaß vergrößert wird.

2. Vorrichtung (101, 120) zur Ermittlung einer Fahrroute (316) für ein Fahrzeug (100), das einen automatisierten Fahrmodus aufweist, bei dem das Fahrzeug (100) zumindest teilweise automatisiert längs- und/oder quergeführt wird, und das einen manuellen Fahrmodus aufweist, bei dem das Fahrzeug (100) zumindest teilweise manuell durch einen Fahrer des Fahrzeugs (100) längs- und/oder quergeführt wird, wobei die Vorrichtung (101, 120) eingerichtet ist,
- Freigabeinformation (315) in Bezug auf die Freigabe des automatisierten Fahrmodus auf unterschiedlichen Fahrbahnabschnitten (314) eines von dem Fahrzeug (100) befahrenen Fahrbahnnetzes (310) zu ermitteln; wobei die Freigabeinformation (315) für eine Vielzahl von Fahrbahnabschnitten (314) des Fahrbahnnetzes (310) jeweils einen möglichen Automatisierungsgrad des Fahrzeugs (310) in dem jeweiligen Fahrbahnabschnitt (314) anzeigt;
- Verfügbarkeitsinformation (211, 212) in Bezug auf eine Verfügbarkeit des Fahrers des Fahrzeugs (100) zur manuellen Längs- und/oder Querführung des Fahrzeugs (100) bei einer Fahrt von einem Ausgangspunkt (311) zu einem Zielpunkt (312) zu ermitteln und/oder zu prädizieren; wobei die Verfügbarkeitsinformation (211, 212) für eine Sequenz von Zeitintervallen während der Fahrt von dem Ausgangspunkt (311) zu dem Zielpunkt (312) jeweils einen gewünschten Automatisierungsgrad des Fahrzeugs (100) in dem jeweiligen Zeitintervall anzeigt;
- für eine Fahrroute (316) mit einer Sequenz von Fahrbahnabschnitten (314) durch das Fahrbahnnetz (310) von dem Ausgangspunkt (311) bis zu dem Zielpunkt (312) auf Basis der Freigabeinformation (315) und auf Basis der Verfügbarkeitsinformation (211, 212) ein Korrelationsmaß einer Korrelation zwischen den möglichen Automatisierungsgraden auf der Sequenz von Fahrbahnabschnitten (314) der Fahrroute (316) und den gewünschten Automatisierungsgraden an der Sequenz von Zeitintervallen bei der Fahrt von dem Ausgangspunkt (311) zu dem Zielpunkt (312) zu ermitteln; und
- die Fahrroute (316) derart zu ermitteln, dass das Korrelationsmaß vergrößert wird

3. Vorrichtung (101, 120) gemäß einem der vorhergehenden Ansprüche, wobei die Vorrichtung (101, 120) eingerichtet ist,
- auf Basis der Verfügbarkeitsinformation (211, 212) ein Zeitintervall bei der Fahrt von dem Ausgangspunkt (311) zu dem Zielpunkt (312) zu prädizieren, in dem der Fahrer nicht zur manuellen Längs- und/oder Querführung des Fahrzeugs (100) verfügbar sein wird; und
- die Fahrroute (316) derart auf Basis der Freigabeinformation (315) zu ermitteln, dass sich das Fahrzeug (100) in dem prädizierten Zeitintervall in einem Fahrbahnabschnitt (314) befindet, der für den automatisierten Fahrmodus freigegeben ist.

4. Vorrichtung (101, 120) gemäß einem der vorhergehenden Ansprüche, wobei die Vorrichtung (101, 120) eingerichtet ist, die Verfügbarkeitsinformation (211, 212) zu ermitteln und/oder zu prädizieren, auf Basis von
- Sensordaten in Bezug auf den Fahrer, die von ein oder mehreren Fahrersensoren (107), insbesondere von ein oder mehreren Innenraum-Kameras, des Fahrzeugs (100) erfasst wurden;
- Daten eines Infotainmentsystems des Fahrzeugs (100);
- Daten aus einem persönlichen Anwendergerät (110) des Fahrers; und/oder
- Daten aus einem digitalen Kalender des Fahrers.

5. Vorrichtung (101, 120) gemäß einem der vorhergehenden Ansprüche, wobei die Vorrichtung (101, 120) eingerichtet ist,
- auf Basis von digitaler Karteninformation in Bezug auf das Fahrbahnnetz (310) eine voraussichtliche Zeitdauer für die zu ermittelnde Fahrroute (316) zu schätzen; und
- die Verfügbarkeitsinformation (211, 212) für die voraussichtliche Zeitdauer zu ermitteln und/oder zu prädizieren.

6. Vorrichtung (101, 120) gemäß einem der vorhergehenden Ansprüche, wobei die Vorrichtung (101, 120) eingerichtet ist,
- die Fahrroute (316) anhand eines Routing-Algorithmus zu ermitteln, bei dem für unterschiedliche mögliche Fahrbahnabschnitte (314) des Fahrbahnnetzes (310) jeweils ein Abschnitts-Gewicht berücksichtigt wird, das eine Wertigkeit des jeweiligen möglichen Fahrbahnabschnitts (314) für die zu ermittelnde Fahrroute (316) anzeigt; und
- die Abschnitts-Gewichte der unterschiedlichen möglichen Fahrbahnabschnitte (314) auf Basis der Verfügbarkeitsinformation (211, 212) zu ermitteln.

7. Vorrichtung (101, 120) gemäß einem der vorhergehenden Ansprüche, wobei
- die Vorrichtung (101, 120) eingerichtet ist, Routeninformation in Bezug auf die ermittelten Fahrroute (316) an den Fahrer des Fahrzeugs (100) auszugeben; und
- die Routeninformation die ein oder mehreren Zeitintervalle und/oder die ein oder mehreren Fahrbahnabschnitte (314) bei der Fahrt entlang der ermittelten Fahrroute (316) anzeigt, in denen das Fahrzeug (100) in dem automatisierten Fahrmodus betrieben werden kann oder in denen das Fahrzeug (100) in dem manuellen Fahrmodus betrieben werden muss.

8. Vorrichtung (101, 120) gemäß einem der vorhergehenden Ansprüche, wobei
- die Vorrichtung (101, 120) eingerichtet ist, digitale Karteninformation in Bezug auf das von dem Fahrzeug (100) befahrene Fahrbahnnetz (310) zu ermitteln, und die Fahrroute (316) auf Basis der digitalen Karteninformation zu ermitteln; und
- die digitale Karteninformation die Freigabeinformation (315) für eine Vielzahl von unterschiedlichen Fahrbahnabschnitten (314) des Fahrbahnnetzes (310) umfasst.

9. Vorrichtung (101, 120) gemäß einem der vorhergehenden Ansprüche, wobei die Vorrichtung (101, 120) eingerichtet ist, bei der Fahrt von dem Ausgangspunkt (311) zu dem Zielpunkt (312), insbesondere wiederholt und/oder periodisch,
- aktualisierte Verfügbarkeitsinformation (211, 212) in Bezug auf die Verfügbarkeit des Fahrers des Fahrzeugs (100) zur manuellen Längs- und/oder Querführung des Fahrzeugs (100) bei der Fahrt von einem aktuellen Standort des Fahrzeugs (100) bis zu dem Zielpunkt (312) zu ermitteln und/oder zu prädizieren; und
- die Fahrroute (316) von dem aktuellen Standort des Fahrzeugs (100) bis zu dem Zielpunkt (312) auf Basis der aktualisierten Verfügbarkeitsinformation (211, 212) anzupassen.

10. Verfahren (400) zur Ermittlung einer Fahrroute (316) für ein Fahrzeug (100), das einen automatisierten Fahrmodus aufweist, bei dem das Fahrzeug (100) zumindest teilweise automatisiert längs- und/oder quergeführt wird, und das einen manuellen Fahrmodus aufweist, bei dem das Fahrzeug (100) zumindest teilweise manuell durch einen Fahrer des Fahrzeugs (100) längs- und/oder quergeführt wird, wobei das Verfahren (400) umfasst,
- Ermitteln (401) von Freigabeinformation (315) in Bezug auf die Freigabe des automatisierten Fahrmodus auf unterschiedlichen Fahrbahnabschnitten (314) eines von dem Fahrzeug (100) befahrenen Fahrbahnnetzes (310);
- Ermitteln und/oder Prädizieren (402) von Verfügbarkeitsinformation (211, 212) in Bezug auf eine Verfügbarkeit des Fahrers des Fahrzeugs (100) zur manuellen Längs- und/oder Querführung des Fahrzeugs (100) bei einer Fahrt von einem Ausgangspunkt (311) zu einem Zielpunkt (312); wobei die Verfügbarkeitsinformation (211, 212) für eine Sequenz von Zeitintervallen während der Fahrt von dem Ausgangspunkt (311) zu dem Zielpunkt (312) jeweils anzeigt, ob der Fahrer des Fahrzeugs (100) in dem jeweiligen Zeitintervall dafür verfügbar ist, das Fahrzeug (100) in dem manuellen Fahrmodus zu betreiben oder nicht;
- Ermitteln, für eine Fahrroute (316) durch das Fahrbahnnetz (310) von dem Ausgangspunkt (311) bis zu dem Zielpunkt (312), auf Basis der Freigabeinformation (315) und auf Basis der Verfügbarkeitsinformation (211, 212) eines Korrelationsmaßes einer Korrelation zwischen Fahrbahnabschnitten (314), in denen der automatisierte Fahrmodus freigegeben ist, und Zeitintervallen, in denen der Fahrer nicht dafür verfügbar ist, das Fahrzeug (100) in dem manuellen Fahrmodus zu betreiben; und
- Ermitteln (403) der Fahrroute (316) derart, dass das Korrelationsmaß vergrößert wird.

11. Verfahren (400) zur Ermittlung einer Fahrroute (316) für ein Fahrzeug (100), das einen automatisierten Fahrmodus aufweist, bei dem das Fahrzeug (100) zumindest teilweise automatisiert längs- und/oder quergeführt wird, und das einen manuellen Fahrmodus aufweist, bei dem das Fahrzeug (100) zumindest teilweise manuell durch einen Fahrer des Fahrzeugs (100) längs- und/oder quergeführt wird, wobei das Verfahren (400) umfasst,
- Ermitteln (401) von Freigabeinformation (315) in Bezug auf die Freigabe des automatisierten Fahrmodus auf unterschiedlichen Fahrbahnabschnitten (314) eines von dem Fahrzeug (100) befahrenen Fahrbahnnetzes (310); wobei die Freigabeinformation (315) für eine Vielzahl von Fahrbahnabschnitten (314) des Fahrbahnnetzes (310) jeweils einen möglichen Automatisierungsgrad des Fahrzeugs (310) in dem jeweiligen Fahrbahnabschnitt (314) anzeigt;
- Ermitteln und/oder Prädizieren (402) von Verfügbarkeitsinformation (211, 212) in Bezug auf eine Verfügbarkeit des Fahrers des Fahrzeugs (100) zur manuellen Längs- und/oder Querführung des Fahrzeugs (100) bei einer Fahrt von einem Ausgangspunkt (311) zu einem Zielpunkt (312); wobei die Verfügbarkeitsinformation (211, 212) für eine Sequenz von Zeitintervallen während der Fahrt von dem Ausgangspunkt (311) zu dem Zielpunkt (312) jeweils einen gewünschten Automatisierungsgrad des Fahrzeugs (100) in dem jeweiligen Zeitintervall anzeigt;
- Ermitteln, für eine Fahrroute (316) mit einer Sequenz von Fahrbahnabschnitten (314) durch das Fahrbahnnetz (310) von dem Ausgangspunkt (311) bis zu dem Zielpunkt (312), auf Basis der Freigabeinformation (315) und auf Basis der Verfügbarkeitsinformation (211, 212) eines Korrelationsmaßes einer Korrelation zwischen den möglichen Automatisierungsgraden auf der Sequenz von Fahrbahnabschnitten (314) der Fahrroute (316) und den gewünschten Automatisierungsgraden an der Sequenz von Zeitintervallen bei der Fahrt von dem Ausgangspunkt (311) zu dem Zielpunkt (312); und
- Ermitteln (403) der Fahrroute (316) derart, dass das Korrelationsmaß vergrößert wird.

## Claims

1. Device (101, 120) for determining a driving route (316) for a vehicle (100) that has an automated driving mode, in which the vehicle (100) is longitudinally and/or laterally controlled in an at least partially automated manner, and that has a manual driving mode, in which the vehicle (100) is longitudinally and/or laterally controlled in an at least partially manual manner by a driver of the vehicle (100), wherein the device (101, 120) is configured
- to determine clearance information (315) relating to clearance for the automated driving mode on different roadway sections (314) of a roadway network (310) used by the vehicle (100);
- to determine and/or predict availability information (211, 212) relating to an availability of the driver of the vehicle (100) for manual longitudinal and/or lateral control of the vehicle (100) on a journey from a starting point (311) to a destination (312); the availability information (211, 212) indicating for each of a sequence of time intervals during the journey from the starting point (311) to the destination (312) whether or not the driver of the vehicle (100) is available in the respective time interval to operate the vehicle (100) in the manual driving mode;
- to determine, for a driving route (316) through the roadway network (310) from the starting point (311) to the destination (312), on the basis of the clearance information (315) and on the basis of the availability information (211, 212), a correlation measure of a correlation between roadway sections (314) in which the automated driving mode has clearance and time intervals in which the driver is not available to operate the vehicle (100) in the manual driving mode; and
- to determine the driving route (316) in such a way that the correlation measure is increased.

2. Device (101, 120) for determining a driving route (316) for a vehicle (100) that has an automated driving mode, in which the vehicle (100) is longitudinally and/or laterally controlled in an at least partially automated manner, and that has a manual driving mode, in which the vehicle (100) is longitudinally and/or laterally controlled in an at least partially manual manner by a driver of the vehicle (100), wherein the device (101, 120) is configured
- to determine clearance information (315) relating to clearance for the automated driving mode on different roadway sections (314) of a roadway network (310) used by the vehicle (100); the clearance information (315) indicating for each of a plurality of roadway sections (314) of the roadway network (310) a possible level of automation of the vehicle (310) in the respective roadway section (314);
- to determine and/or predict availability information (211, 212) relating to an availability of the driver of the vehicle (100) for manual longitudinal and/or lateral control of the vehicle (100) on a journey from a starting point (311) to a destination (312); the availability information (211, 212) indicating for each of a sequence of time intervals during the journey from the starting point (311) to the destination (312) a desired level of automation of the vehicle (100) in the respective time interval;
- to determine, for a driving route (316) comprising a sequence of roadway sections (314) through the roadway network (310) from the starting point (311) to the destination (312), on the basis of the clearance information (315) and on the basis of the availability information (211, 212), a correlation measure of a correlation between the possible levels of automation on the sequence of roadway sections (314) of the driving route (316) and the desired levels of automation for the sequence of time intervals on the journey from the starting point (311) to the destination (312); and
- to determine the driving route (316) in such a way that the correlation measure is increased.

3. Device (101, 120) according to either of the preceding claims, wherein the device (101, 120) is configured
- to take the availability information (211, 212) as a basis for predicting a time interval on the journey from the starting point (311) to the destination (312) in which the driver will not be available for manual longitudinal and/or lateral control of the vehicle (100); and
- to determine the driving route (316) on the basis of the clearance information (315) in such a way that in the predicted time interval the vehicle (100) is located in a roadway section (314) that is cleared for the automated driving mode.

4. Device (101, 120) according to one of the preceding claims, the device (101, 120) being configured to determine and/or predict the availability information (211, 212) on the basis of
- sensor data relating to the driver that have been acquired by one or more driver sensors (107), in particular by one or more interior cameras, of the vehicle (100);
- data from an infotainment system of the vehicle (100);
- data from a personal user device (110) of the driver; and/or
- data from a digital calendar of the driver.

5. Device (101, 120) according to either of the preceding claims, wherein the device (101, 120) is configured
- to take digital map information relating to the roadway network (310) as a basis for estimating a probable duration for the driving route (316) that is to be determined; and
- to determine and/or predict the availability information (211, 212) for the probable duration.

6. Device (101, 120) according to either of the preceding claims, wherein the device (101, 120) is configured
- to determine the driving route (316) on the basis of a routing algorithm in which, for each of different possible roadway sections (314) of the roadway network (310), a section weight is taken into consideration, which indicates a value of the respective possible roadway section (314) for the driving route (316) that is to be determined; and
- to determine the section weights of the different possible roadway sections (314) on the basis of the availability information (211, 212).

7. Device (101, 120) according to one of the preceding claims, wherein
- the device (101, 120) is configured to output route information relating to the determined driving route (316) to the driver of the vehicle (100); and
- the route information indicates the one or more time intervals and/or the one or more roadway sections (314) on the journey along the determined driving route (316) in which the vehicle (100) can be operated in the automated driving mode or in which the vehicle (100) must be operated in the manual driving mode.

8. Device (101, 120) according to one of the preceding claims, wherein
- the device (101, 120) is configured to determine digital map information relating to the roadway network (310) used by the vehicle (100) and to determine the driving route (316) on the basis of digital map information; and
- the digital map information comprises the clearance information (315) for a plurality of different roadway sections (314) of the roadway network (310).

9. Device (101, 120) according to one of the preceding claims, wherein the device (101, 120) is configured so as, on the journey from the starting point (311) to the destination (312), in particular repeatedly and/or periodically,
- to determine and/or predict updated availability information (211, 212) relating to the availability of the driver of the vehicle (100) for manual longitudinal and/or lateral control of the vehicle (100) on the journey from a current location of the vehicle (100) to the destination (312); and
- to adapt the driving route (316) from the current location of the vehicle (100) to the destination (312) on the basis of the updated availability information (211, 212).

10. Method (400) for determining a driving route (316) for a vehicle (100) that has an automated driving mode, in which the vehicle (100) is longitudinally and/or laterally controlled in an at least partially automated manner, and that has a manual driving mode, in which the vehicle (100) is longitudinally and/or laterally controlled in an at least partially manual manner by a driver of the vehicle (100), wherein the method (400) comprises
- determining (401) clearance information (315) relating to clearance for the automated driving mode on different roadway sections (314) of a roadway network (310) used by the vehicle (100);
- determining and/or predicting (402) availability information (211, 212) relating to an availability of the driver of the vehicle (100) for manual longitudinal and/or lateral control of the vehicle (100) on a journey from a starting point (311) to a destination (312); the availability information (211, 212) indicating for each of a sequence of time intervals during the journey from the starting point (311) to the destination (312) whether or not the driver of the vehicle (100) is available in the respective time interval to operate the vehicle (100) in the manual driving mode;
- determining, for a driving route (316) through the roadway network (310) from the starting point (311) to the destination (312), on the basis of the clearance information (315) and on the basis of the availability information (211, 212), a correlation measure of a correlation between roadway sections (314) in which the automated driving mode has clearance and time intervals in which the driver is not available to operate the vehicle (100) in the manual driving mode; and
- determining (403) the driving route (316) in such a way that the correlation measure is increased.

11. Method (400) for determining a driving route (316) for a vehicle (100) that has an automated driving mode, in which the vehicle (100) is longitudinally and/or laterally controlled in an at least partially automated manner, and that has a manual driving mode, in which the vehicle (100) is longitudinally and/or laterally controlled in an at least partially manual manner by a driver of the vehicle (100), wherein the method (400) comprises
- determining (401) clearance information (315) relating to clearance for the automated driving mode on different roadway sections (314) of a roadway network (310) used by the vehicle (100); the clearance information (315) indicating for each of a plurality of roadway sections (314) of the roadway network (310) a possible level of automation of the vehicle (310) in the respective roadway section (314);
- determining and/or predicting (402) availability information (211, 212) relating to an availability of the driver of the vehicle (100) for manual longitudinal and/or lateral control of the vehicle (100) on a journey from a starting point (311) to a destination (312); the availability information (211, 212) indicating for each of a sequence of time intervals during the journey from the starting point (311) to the destination (312) a desired level of automation of the vehicle (100) in the respective time interval;
- determining, for a driving route (316) comprising a sequence of roadway sections (314) through the roadway network (310) from the starting point (311) to the destination (312), on the basis of the clearance information (315) and on the basis of the availability information (211, 212), a correlation measure of a correlation between the possible levels of automation on the sequence of roadway sections (314) of the driving route (316) and the desired levels of automation for the sequence of time intervals on the journey from the starting point (311) to the destination (312); and
- determining (403) the driving route (316) in such a way that the correlation measure is increased.

## Revendications

1. Dispositif (101, 120) pour déterminer un itinéraire (316) pour un véhicule (100) qui présente un mode de conduite automatisée, le véhicule (100) étant conduit au moins partiellement de manière automatisée dans la direction longitudinale et/ou transversale, et qui présente un mode de conduite manuelle, dans lequel le véhicule (100) est au moins partiellement conduit manuellement dans la direction longitudinale et/ou transversale par un conducteur du véhicule (100), le dispositif (101, 120) étant conçu pour
- déterminer une information d'autorisation (315) concernant l'autorisation du mode de conduite automatisée sur différentes portions de route (314) d'un réseau routier (310) emprunté par le véhicule (100) ;
- déterminer et/ou prédire une information de disponibilité (211, 212) concernant la disponibilité du conducteur du véhicule (100) pour conduire manuellement le véhicule (100) dans la direction longitudinale et/ou transversale lors d'un trajet allant d'un point de départ (311) à un point d'arrivée (312) ; l'information de disponibilité (211, 212) indique chaque fois, pour une séquence d'intervalles de temps pendant le trajet allant du point de départ (311) au point d'arrivée (312), si le conducteur du véhicule (100) est disponible ou non pendant l'intervalle de temps respectif pour conduire le véhicule (100) en mode de conduite manuelle ;
- pour un itinéraire (316) à travers le réseau routier (310), allant du point de départ (311) au point d'arrivée (312), déterminer, sur la base de l'information d'autorisation (315) et sur la base de l'information de disponibilité (211, 212), une mesure de corrélation d'une corrélation entre les portions de route (314) dans lesquelles le mode de conduite automatisée est autorisé, et les intervalles de temps pendant lesquels le conducteur n'est pas disponible pour conduire le véhicule (100) en mode de conduite manuelle ; et
- déterminer l'itinéraire (316) de telle sorte que la mesure de corrélation soit augmentée.

2. Dispositif (101, 120) pour déterminer un itinéraire (316) pour un véhicule (100) qui présente un mode de conduite automatisée, le véhicule (100) étant conduit au moins partiellement de manière automatisée dans la direction longitudinale et/ou transversale, et qui présente un mode de conduite manuelle, dans lequel le véhicule (100) est au moins partiellement conduit manuellement dans la direction longitudinale et/ou transversale par un conducteur du véhicule (100), le dispositif (101, 120) étant conçu pour
- déterminer une information d'autorisation (315) concernant l'autorisation du mode de conduite automatisée sur différentes portions de route (314) d'un réseau routier (310) emprunté par le véhicule (100) ; l'information d'autorisation (315) indique chaque fois, pour une pluralité de portions de route (314) du réseau routier (310), un degré d'automatisation possible du véhicule (310) dans la portion de route (314) respective ;
- déterminer et/ou prédire une information de disponibilité (211, 212) concernant la disponibilité du conducteur du véhicule (100) pour conduire manuellement le véhicule (100) dans la direction longitudinale et/ou transversale lors d'un trajet allant d'un point de départ (311) à un point d'arrivée (312) ; l'information de disponibilité (211, 212) indique chaque fois, pour une séquence d'intervalles de temps pendant le trajet allant du point de départ (311) au point d'arrivée (312), un degré d'automatisation souhaité du véhicule (100) dans l'intervalle de temps respectif ;
- pour un itinéraire (316) avec une séquence de portions de route (314) à travers le réseau routier (310) allant du point de départ (311) au point d'arrivée (312), sur la base de l'information d'autorisation (315) et sur la base de l'information de disponibilité (211, 212), une mesure de corrélation d'une corrélation entre les degrés d'automatisation possibles sur la séquence de portions de route (314) de l'itinéraire (316) et les degrés d'automatisation souhaités sur la séquence d'intervalles de temps lors du trajet allant du point de départ (311) au point d'arrivée (312) ; et
- déterminer l'itinéraire (316) de telle sorte que la mesure de corrélation soit augmentée.

3. Dispositif (101, 120) selon l'une des revendications précédentes, le dispositif (101, 120) étant conçu pour
- prédire, sur la base de l'information de disponibilité (211, 212), un intervalle de temps pendant le trajet allant du point de départ (311) au point d'arrivée (312) pendant lequel le conducteur ne sera pas disponible pour la conduite manuelle longitudinale et/ou transversale du véhicule (100) ; et
- déterminer l'itinéraire (316) sur la base de l'information d'autorisation (315) de telle sorte que le véhicule (100) se trouve dans l'intervalle de temps prédit dans une portion de route (314) qui est autorisée pour le mode de conduite automatisée.

4. Dispositif (101, 120) selon l'une des revendications précédentes, le dispositif (101, 120) étant conçu pour déterminer et/ou prédire l'information de disponibilité (211, 212) sur la base
- de données de capteurs relatives au conducteur, qui ont été enregistrées par un ou plusieurs capteurs (107) de conducteur, en particulier par une ou plusieurs caméras de l'habitacle du véhicule (100) ;
- de données provenant d'un système d'infodivertissement du véhicule (100) ;
- de données provenant d'un appareil d'utilisateur personnel (110) du conducteur ; et/ou
- de données provenant d'un calendrier numérique du conducteur.

5. Dispositif (101, 120) selon l'une des revendications précédentes, le dispositif (101, 120) étant conçu pour
- estimer, sur la base d'informations cartographiques numériques relatives au réseau routier (310), une durée probable pour l'itinéraire à déterminer (316) ; et
- déterminer et/ou prédire l'information de disponibilité (211, 212) pour la durée prévue.

6. Dispositif (101, 120) selon l'une des revendications précédentes, le dispositif (101, 120) étant conçu pour
- déterminer l'itinéraire (316) au moyen d'un algorithme de routage, dans lequel, pour différentes portions de route possibles (314) du réseau routier (310), il est tenu compte d'un poids de portion qui indique une importance de la portion de route possible (314) respective pour l'itinéraire à déterminer (316) ; et
- déterminer les poids de portion des différentes portions de route possibles (314) sur la base de l'information de disponibilité (211, 212).

7. Dispositif (101, 120) selon l'une des revendications précédentes,
- le dispositif (101, 120) étant conçu pour fournir au conducteur du véhicule (100) des informations d'itinéraire sur l'itinéraire déterminé (316) ; et
- les informations d'itinéraire indiquent un ou plusieurs intervalles de temps et/ou une ou plusieurs portions de route (314) lors du trajet le long de l'itinéraire déterminé (316), pendant lesquels le véhicule (100) peut être utilisé en mode de conduite automatisée ou pendant lesquels le véhicule (100) doit être utilisé en mode de conduite manuelle.

8. Dispositif (101, 120) selon l'une des revendications précédentes,
- le dispositif (101, 120) étant conçu pour déterminer des informations cartographiques numériques relatives au réseau routier (310) emprunté par le véhicule (100), et pour déterminer l'itinéraire (316) sur la base des informations cartographiques numériques ; et
- les informations cartographiques numériques comprenant l'information d'autorisation (315) pour une pluralité de portions de route différentes (314) du réseau routier (310).

9. Dispositif (101, 120) selon l'une des revendications précédentes, le dispositif (101, 120) étant conçu pour fournir, pendant le trajet allant du point de départ (311) au point d'arrivée (312), en particulier de manière répétée et/ou périodique,
- une détermination et/ou une prédiction de l'information de disponibilité (211, 212) actualisée concernant la disponibilité du conducteur du véhicule (100) pour la conduite manuelle longitudinale et/ou transversale du véhicule (100) lors du trajet d'un emplacement actuel du véhicule (100) jusqu'au point d'arrivée (312) ; et
- une adaptation de l'itinéraire (316) depuis la position actuelle du véhicule (100) jusqu'au point d'arrivée (312) sur la base de l'information de disponibilité actualisée (211, 212).

10. Procédé (400) pour déterminer un itinéraire (316) pour un véhicule (100) qui présente un mode de conduite automatisée, dans lequel le véhicule (100) est conduit au moins partiellement de manière automatisée dans la direction longitudinale et/ou transversale, et qui présente un mode de conduite manuelle, dans lequel le véhicule (100) est conduit au moins partiellement manuellement par un conducteur du véhicule (100) dans la direction longitudinale et/ou transversale, le procédé (400) comprenant
- le fait (401) de déterminer une information d'autorisation (315) concernant l'autorisation du mode de conduite automatisée sur différentes portions de route (314) d'un réseau routier (310) emprunté par le véhicule (100) ;
- le fait (402) de déterminer et/ou de prédire une information de disponibilité (211, 212) concernant la disponibilité du conducteur du véhicule (100) pour conduire manuellement le véhicule (100) dans la direction longitudinale et/ou transversale pendant un trajet allant d'un point de départ (311) à un point d'arrivée (312) ; l'information de disponibilité (211, 212) indique chaque fois, pour une séquence d'intervalles de temps pendant le trajet allant du point de départ (311) au point d'arrivée (312), si le conducteur du véhicule (100) est disponible ou non pendant l'intervalle de temps respectif pour conduire le véhicule (100) en mode de conduite manuelle ;
- le fait de déterminer, pour un itinéraire (316) à travers le réseau routier (310) allant du point de départ (311) au point d'arrivée (312), sur la base de l'information d'autorisation (315) et sur la base de l'information de disponibilité (211, 212), une mesure de corrélation d'une corrélation entre des portions de route (314) dans lesquelles le mode de conduite automatisée est autorisé et des intervalles de temps pendant lesquels le conducteur n'est pas disponible pour conduire le véhicule (100) en mode de conduite manuelle ; et
- le fait (403) de déterminer l'itinéraire (316) de telle sorte que la mesure de corrélation soit augmentée.

11. Procédé (400) pour déterminer un itinéraire (316) pour un véhicule (100) qui présente un mode de conduite automatisée, dans lequel le véhicule (100) est conduit au moins partiellement de manière automatisée dans la direction longitudinale et/ou transversale, et qui présente un mode de conduite manuelle, dans lequel le véhicule (100) est conduit au moins partiellement manuellement par un conducteur du véhicule (100) dans la direction longitudinale et/ou transversale, le procédé (400) comprenant
- le fait (401) de déterminer une information d'autorisation (315) concernant l'autorisation du mode de conduite automatisée sur différentes portions de route (314) d'un réseau routier (310) emprunté par le véhicule (100) ; l'information d'autorisation (315) indique chaque fois, pour une pluralité de portions de route (314) du réseau routier (310), un degré d'automatisation possible du véhicule (310) dans la portion de route (314) respective ;
- le fait (402) de déterminer et/ou de prédire une information de disponibilité (211, 212) concernant la disponibilité du conducteur du véhicule (100) pour la conduite manuelle longitudinale et/ou transversale du véhicule (100) lors d'un trajet allant d'un point de départ (311) à un point d'arrivée (312) ; l'information de disponibilité (211, 212) indique chaque fois, pour une séquence d'intervalles de temps pendant le trajet allant du point de départ (311) au point d'arrivée (312), un degré d'automatisation souhaité du véhicule (100) dans l'intervalle de temps respectif ;
- le fait de déterminer, pour un itinéraire (316) ayant une séquence de portions de route (314) à travers le réseau routier (310) allant du point de départ (311) au point d'arrivée (312), sur la base d'une information d'autorisation (315) et sur la base de l'information de disponibilité (211, 212), une mesure de corrélation d'une corrélation entre les degrés d'automatisation possibles sur la séquence de portions de route (314) de l'itinéraire (316) et les degrés d'automatisation souhaités sur la séquence d'intervalles de temps lors du trajet allant du point de départ (311) au point d'arrivée (312) ; et
- le fait (403) de déterminer l'itinéraire (316) de telle sorte que la mesure de corrélation soit augmentée.
